# EUROPEAN PATENT SPECIFICATION

(11) **EP 1 583 919 B1**
(45) Date of publication and mention of the grant of the patent: **10.03.2010**
(21) Application number: 04700622.6
(22) Date of filing: 07.01.2004
(51) Int. Cl.: F16K 27/06

(54) **ISOLATION VALVE WITH ROTATABLE FLANGE**
ABSCHLUSSHAHN MIT DREHBAREM FLANSCH
ROBINET DE SECTIONNEMENT A JOUE ROTATIVE

(30) Priority: 07.01.2003 US 337498; 25.11.2003 US 721481
(43) Date of publication of application: 12.10.2005
(60) Divisional application: 06115757.4
(73) Proprietor: ITT Manufacturing Enterprises, Inc., Wilmington, Delaware 19801 (US)
(72) Inventor: ARENTSEN,Robert, P., Downers Grove, IL 60515 (US); BUNLUAPHOB, Chalard, Glenview, IL 60025 (US); BURANATUM, Prasert, Skokie, IL 60077 (US); SCHAFFER, Daniel, E., Schaumburg, IL 60193 (US); HATHY-RILES, Lisa, E., Wheeling, IL 60090 (US)
(74) Representative: Esser, Wolfgang
(86) International application number: PCT/US2004/000312
(87) International publication number: WO 2004/063606

(56) References cited:
- DE-C- 358 845
- FR-A- 1 600 725
- FR-A- 2 602 297
- GB-A- 1 022 012
- GB-A- 2 233 739
- US-A1- 2002 162 986
- US-A1- 2002 195 153

## Description

### FIELD OF THE INVENTION

This invention is in the field of valves, and specifically relates to adjustable flanges for securing isolation valves in a fluid system.

### BACKGROUND OF THE INVENTION

The use of circulator pumps to move fluid in closed-loop hot water systems is widespread. When a circulator pump needs to be temporarily removed from the system for repair, replacement, or maintenance, the system must be opened to the atmosphere. This procedure may require the system to be shut down and completely, or at least partially, drained before the pump can be removed. Depending on the size of the system, draining and then refilling can be a time consuming process. Additionally, shutting down the system during this time may be undesirable.

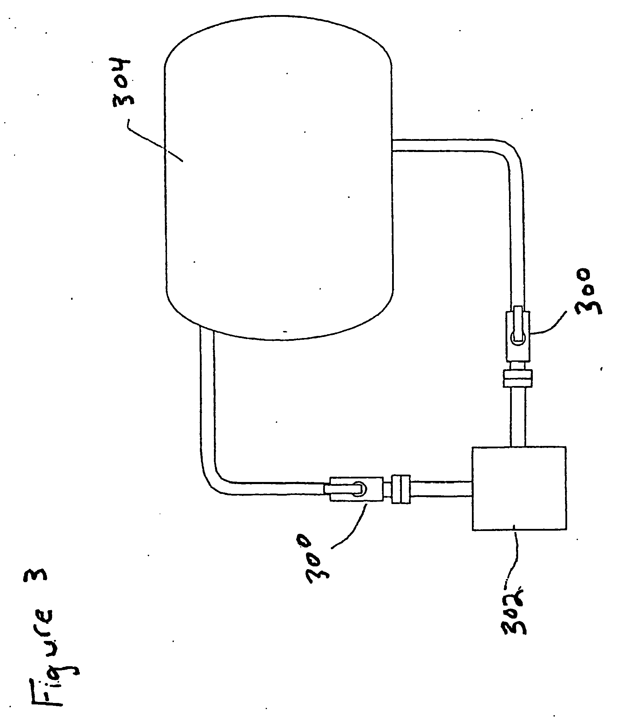

Figure 3 illustrates the use of isolation valves 300 to isolate circulator pump302 from the remainder of the fluid carrying system 304. The use of isolation valves 300 at both the input and the output sides of circulator pump 302 allows the pump to be removed by draining only the pump itself and possibly short connecting pipes. The valves are closed and then the pump can be drained, uncoupled from the system, and removed. The remainder of the system 304 is not drained and may even continue operating at a reduced level with a second pump on a separate loop. In modern installations of hydronic heating systems, such use of isolation valves is common.

Many of the fluid system components for which the use of isolation valves is desirable are heavy and/or cumbersome and in many applications may be located in areas with little space. This may make removal and replacement of these components difficult. Therefore, it is desirable that the process of coupling and uncoupling the isolation valves to the system component be as simple as possible. Mating flanges are commonly used to couple isolation valves to the system components. In order to couple the component to the isolation valves, the bolt holes in the mating flanges must be matched up accurately. This may be difficult in tight spaces with heavy, cumbersome components.
US 2002-162,986 A1 shows a ball valve for a hydraulic heating or cooling system, in which a purge port is integral with the valve body of the ball valve. The valve body that has an inlet and outlet port, and an interior passage configured to permit liquid to flow between the inlet and outlet ports. A flange element to connect the valve to a hydraulic circulator may be adjusted in its orientation.

The considerations leading to the desirability of isolation valves are not particular to hot water systems, but they may also be important in systems such as hydraulic (oil) systems, potable water systems, sewage treatment systems, refrigeration systems, and numerous industrial plumbing systems in chemical, and other, manufacturing facilities. In some cases the considerations may be even more important than in hot water systems due to the danger and/or expense attendant to handling the fluids contained within the systems during draining of the fluid. The same considerations also exist for other discreet components in fluid carrying systems, such as filters, hot water heaters, heat exchangers, etc. Therefore, it may also be desirable to couple these other discreet components into their respective fluid carrying systems with isolation valves.

It is desirable for an isolation valve to be designed so that the valve may be simply set in a fully closed or a fully open position. It is also desirable that the condition of the isolation valve (either open or closed) be obvious. If it is not clear whether the valve is open or closed, removal of the isolated component may be attempted with an isolation valve only partially closed, which may lead to leakage of fluid from the system or contamination of the system. Quarter turn ball valves with straight handles have two clearly identifiable positions90 apart, fully open and fully closed, which may be easily noted by the handle position, parallel to the fluid flow for open and perpendicular to the fluid flow for closed. Valve stops prohibit the quarter turn ball valve from rotating beyond these positions. Therefore, a quarter turn ball valve is preferred for use as an isolation valve.

One isolation valve design has a quarter turn ball valve with a cast flange rigidly integrated into the body of the valve for coupling the isolation valve onto a mating flange of the system component. Although this design desirably includes an easily operated valve design and relatively simple manufacture, the rigid integration of the cast flange requires greater accuracy in order to properly couple the mating flanges. Another design includes a free-floating flange, which is allowed to rotate relative to the valve, but this design includes a ball valve that is allowed to rotate 360° and is operated with either a screwdriver or an allen wrench rather than a handle like a standard quarter turn ball valve. This design makes it difficult to determine with certainty if the isolation valve is fully closed, or fully open.

Traditionally, water heating systems were gravity fed. In other words, because hot water weighs less than cold water, the theory of gravity feed is that the hot water rises to the top of the equipment thereby heating terminal units along the way. However, gravity flow, also referred to as ghost flow, is undesirable for contemporary water heating systems as it leads to overheating of zones.

Currently, many water heating systems include flow control valves to prevent gravity flow. Without flow control valves, uncontrollable heating of zones in a building may occur. When the system pump is off, the flow control valve is closed, thereby preventing the flow of unwanted hot water past the valve. When the pump turns on, the pressure developed by the pump opens the valve and permits water to flow past it.

These flow control valves are additional components in the heating system that are themselves expensive and add the additional expense of installation. There is a need for an improved, easy-to-install valve assembly that provides fluid isolation and prevents gravity flow in a fluid system.

### SUMMARY OF THE INVENTION

An embodiment of the present invention comprises an isolation valve assembly according to independent claim 1 including a quarter turn ball valve, an insert, and a flange. The quarter turn ball valve includes a housing having inlet and outlet ports. The insert includes a cylindrical body having an axial flow channel. One end of the insert body is coupled to one of the ports of the quarter turn ball valve and the other end of the insert body has a flared lip. The flange has a circular hole, the diameter of which is greater than that of the insert body. The flange after assembly is rotatably carried on the outer surface of the insert and is retained thereon by the lip. The flange is also formed with holes adapted to cooperate with fasteners to secure the valve in a piping system.

### BRIEF DESCRIPTION OF THE DRAWINGS

The invention is best understood from the following detailed description when read in connection with the accompanying drawing. It is emphasized that, according to common practice, the various features of the drawing may not be to scale and that the dimensions of the various features may be arbitrarily expanded or reduced for clarity. Included in the drawing are the following figures:
- Figure1A: is an exploded perspective view of an embodiment of an isolation valve assembly with an adjustable flange according to the present invention.
- Figure 1B: is a perspective view of the isolation valve assembly shown in Figure 1A in its assembled condition.
- Figure 2A: is a front plan drawing one embodiment of a rotatable flange according to the present invention.
- Figure 2B: is a front plan drawing another embodiment of a rotatable flange according to the present invention.
- Figure 2C: is a front plan drawing the rotatable flange shown in the embodiment of Figure 1A.
- Figure 2D: is a front plan drawing still another embodiment of a rotatable flange according to the present invention.
- Figure 3: is a block diagram showing the use of isolation valves in a fluid carrying system.
- Figure 4: is a cross-sectional side view of another embodiment of an isolation valve assembly with a check valve included, configured to be installed on the discharge side of a system component that requires removal.
- Figure 5: is an exploded perspective view of the isolation valve assembly shown in Figure 4.
- Figure 6: is a cutaway perspective view of two isolation valve assemblies, one of which is similar to that shown in Figure 4, and the other configured to be installed on the suction side of a system component that requires removal.

### DETAILED DESCRIPTION

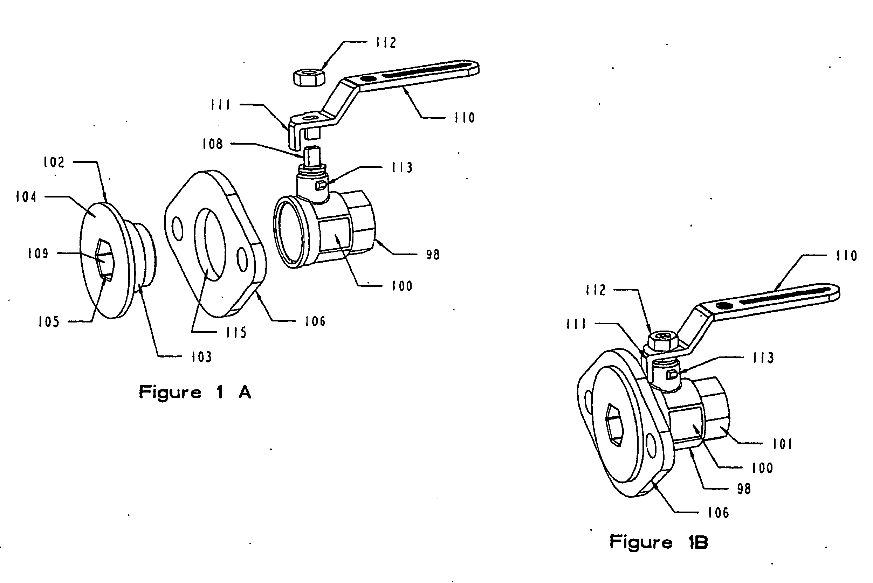

Figures 1A and 1B illustrate a valve assembly in accordance with an embodiment of this invention. This valve assembly includes a valve 98, insert 102, and rotatable flange 106. Valve 98 includes a valve body 100 and, as will be understood, both the valve and insert 102 are necessarily in contact with the fluid during operation of the associated fluid system. Therefore, it is desirable for these two parts of the valve assembly to be formed of a material that is unlikely to interact significantly with or contaminate the fluid. For example, in a potable water system valve body 100 and insert 102 may be desirably formed of brass.
The valve 98 is a quarter turn ball valve of any usual construction and, thus, its inner parts are not shown. The housing 100 is formed with inlet and outlet ports and includes a hollow, substantially cylindrical portion aligned with the direction of the fluid flow and forming a flow channel in which a valve seat is formed. Although this substantially cylindrical portion of valve body 100 is shown in Figures 1A and 1B as having a circular cross-section, it is contemplated that a section of this portion may have a polygonal exterior surface 101 to accommodate a wrench for coupling valve housing 100 to insert 102 and/or a pipe in the fluid system.

The housing 100 is also formed with a raised cylindrical portion for accommodating the valve mechanism. Stem 108 of the valve extends through this cylindrical housing portion and is connected to handle 110 for opening and closing the valve. Handle 110 is coupled to valve stem 108 by a fastener 112 and includes a skirt 111 extending down the side of the raised cylindrical portion of the housing 100. Shoulders 113 (only one of which is shown) are formed on the raised cylindrical portion and are spaced apart by ninety degrees (90°). The skirt 111 and the shoulders 113 serve to limit the rotation of the handle 110 and thus the valve member between its open and closed position. Any suitable rotation limiting arrangement can be used. Other standard methods to couple handle 110 to valve stem 108 may be used as well.

Similar to the isolation valves 300 shown in Figure 3, the valves 98 are coupled to a pipe system so that once the valves are closed, the component coupled between them may be removed for maintenance, repair, replacement, inspection, etc., without requiring the rest of the system to be drained, or shut down. The interior of one of the inlet or outlet ports, here the inlet port, is internally threaded (adjacent the polygonal exterior 101) so that the valve assembly can be screwed onto a threaded pipe in the associated fluid system. Alternatively, this port interior may be press fitted and/or sweat soldered, or may include a standard coupling flange.

The other port, the outlet port in this embodiment, is coupled to insert 102. Insert 102 has a hole running axially therethrough, functioning as a fluid flow channel 109 that is aligned with the flow channel in the valve housing 100. Insert 102 is shown to have an externally threaded circular section 103 and a polygonal interior section 105 to accommodate a wrench for coupling insert 102 to valve housing 100. The outlet port of valve housing 100 is internally threaded to allow coupling with the threaded section 103 of the insert. Alternatively, the threaded section of insert 102 may be designed to slide into the valve housing body and once inserted may be secured by sweat soldering or other usual means. Press fitting of insert 102 into the aperture of valve body 100 may also be possible.

Before coupling insert 102 to valve housing 100, the threaded end 103 of insert 102 is slipped through the central hole 115 formed in rotatable flange 106. The diameter of hole 115 is such that it snugly, but rotatably fits on the exterior of the insert. The other end of insert 102, that is, the end with the polygonal section 105, includes lip 104. Lip 104 is an annular flange that extends beyond the outer surface of the insert 102 and provides an abutment that serves to prevent rotatable flange 106 from being removed from the assembled valve assembly. Although lip 104 is shown to have a circular cross-section in the embodiment of Figures 1A and 1B, it is contemplated that this lip may have other cross-sections and that it need not be continuous. It could include a series of spaced apart fingers that engage the insert.

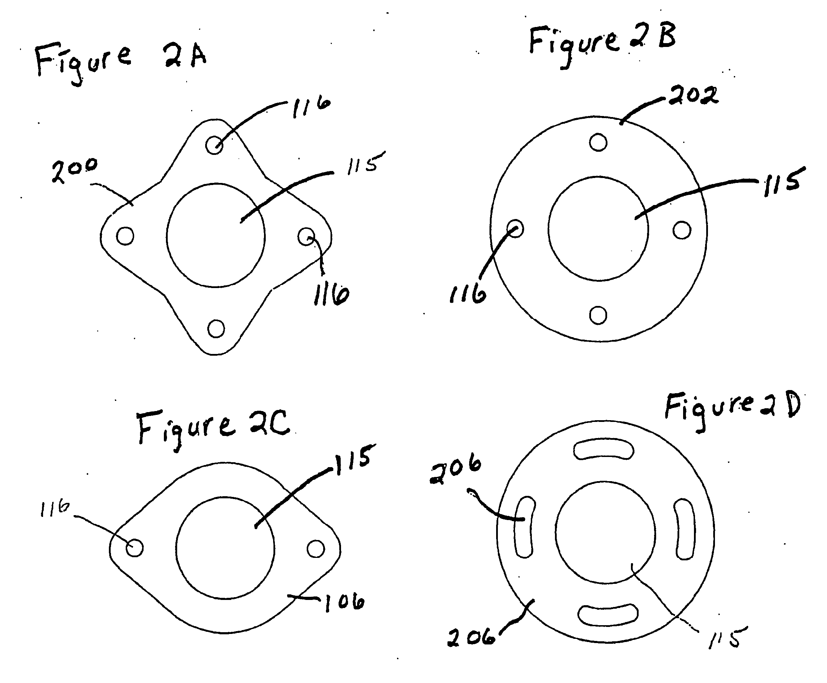

Figures 2A-D illustrate end views of four embodiments of rotatable flanges that may be used in the present invention. Figure 2A shows a four point star shaped flange with one bolt hole 116 in each point of the star. Figure 2B shows a circular flange with four bolt holes 116 equally spaced around the flange. Figure 2C shows the diamond shaped flange shown as part of the valve assembly shown in Figure 1A-C. This diamond shaped flange has two bolt holes 116 located symmetrically on opposite sides of central hole 208. The flange shown in Figure 2D is similar to the exemplary flange shown in Figure 2B, except that bolt holes 116 have been replaced by slots 206. These slots further simplify the coupling of the rotatable flange to its mating flange by accommodating slight misalignments between the slots and the holes in the mating flange. It is noted that, although Figures 2B and 2D include four bolt holes or slots, other numbers of holes or bolt slots may be used. It is also noted that the holes or slots are preferably arrange symmetrically around the flange.

These rotatable flanges are flat, stamped metal flanges having central hole 115 located substantially in the center of the flange with either the bolt holes 116 or slots 206 located near the perimeter of the flange to accommodate bolts for coupling the flanges to mating flanges. Strong, durable metals, such as chrome plated steel or zinc plated steel, are desirable materials for exemplary rotatable flanges. The surface of an exemplary rotatable flange may include a stepped, or beveled, area along the edge of central hole 115 for lip 104 of insert 102 to seat into when the exemplary rotatable flange is coupled to its mating flange

In valve assemblies in which the rotatable flange forms a seal directly to its mating flange, rather than the insert forming the seal, the material of the flange is desirably chosen to be a metal which does not significantly interact with the fluid. In such a valve assembly, it may be desirable for the rotatable flange to include a circular groove on its front surface, between central hole 115 and bolt holes 116 and/or bolt slots 206, for an O-ring to improve the seal.

In potable water systems and systems for corrosive fluids, it may be particularly desirable for the flange to remain clear of the fluid path. In these fluid carrying systems, lip 104 of insert 102 is desirably designed to form the seal with a mated pipe or component when the rotatable flange is coupled into the fluid carrying system and the fluid does not come into contact with flange 106. Inserts that are designed to provide a seal as well as holding rotatable flange 106 onto the valve assembly may be formed from a somewhat malleable metal, such as copper or brass, to allow sight deformation during coupling of the rotatable flange to its mating flange, thereby improving the seal. Lip 104 of insert 102 may also include a circular groove on its surface for an O-ring to improve the seal.

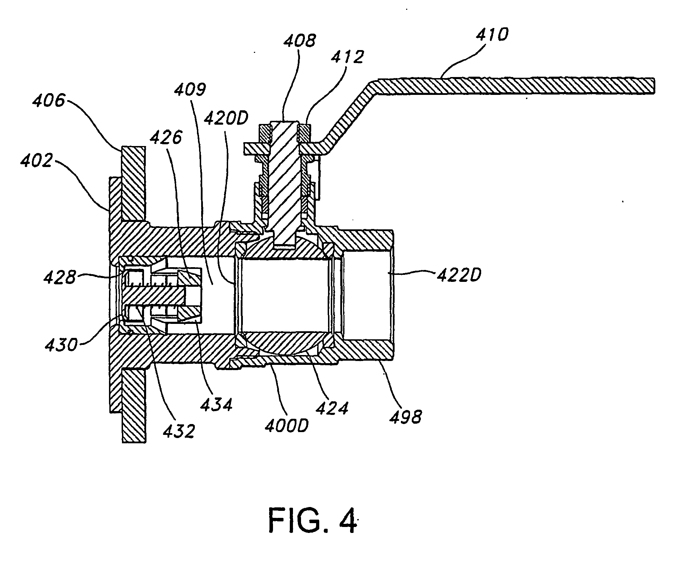

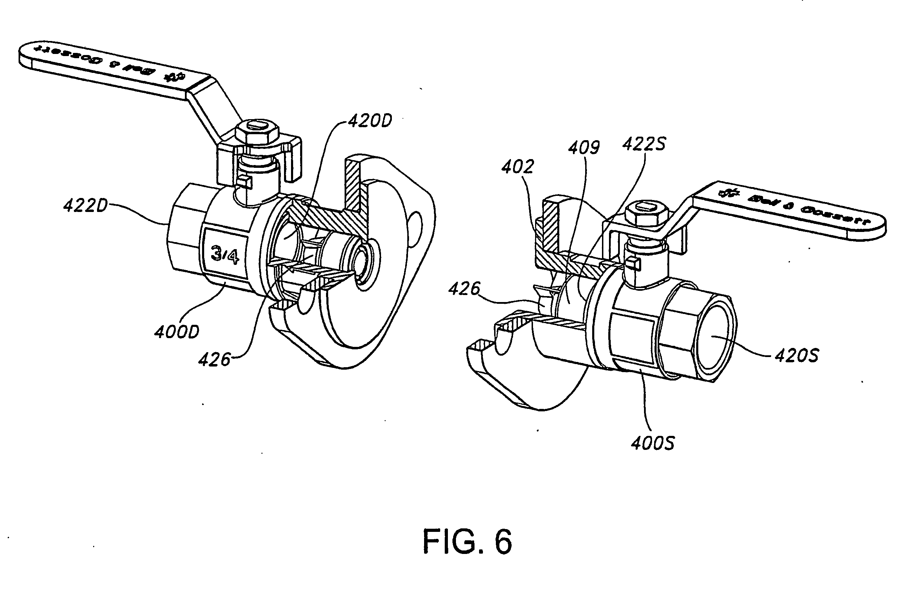

Figures 4 - 6 illustrate another embodiment of the valve assembly. The configuration and operation of the valve assembly of this embodiment are essentially the same as those of the valve assembly described previously with reference to Figures 1A - 3, with some notable differences. Reference numeral notation "D" denotes the discharge side with respect to a system component (not shown) that requires removal, while reference numeral notation "S" denotes the suction side, the significance of which will be explained subsequently. Similar to the embodiment described previously, the valve assembly illustrated in Figures 4 - 6 includes a ball valve 498 and a rotatable flange 406. Ball valve 498 includes a valve housing 400D, 400S having an inlet port 420D, 420S and an outlet port 422D, 422S and a valve member 424 adapted to control flow therethrough. Rotatable flange 406 secures the assembly in a fluid system. Referring specifically to valve body 400D of Figure 4, an insert 402 including a fluid flow channel 409 is coupled to inlet port 420D in housing 400D. Referring specifically to valve body 400S of Figure 6, an insert 402 including a fluid flow channel 409 is coupled to outlet port 422S in housing 400S. Generally, the valve assembly further includes a stem 408 connected to a handle 410 for opening and closing the valve 498. Handle 410 is coupled to valve stem 408 by a fastener 412.

Generally, the system fluid flow path includes a relative upstream portion and a relative downstream portion. These relative upstream and downstream portions define the inlet and outlet ports of the valve assemblies illustrated in Figures 4 - 6. More specifically, the inlet port of each valve assembly is located at the upstream portion of the system fluid flow path, and the outlet port of each valve assembly is located at the downstream portion of the system fluid flow path.

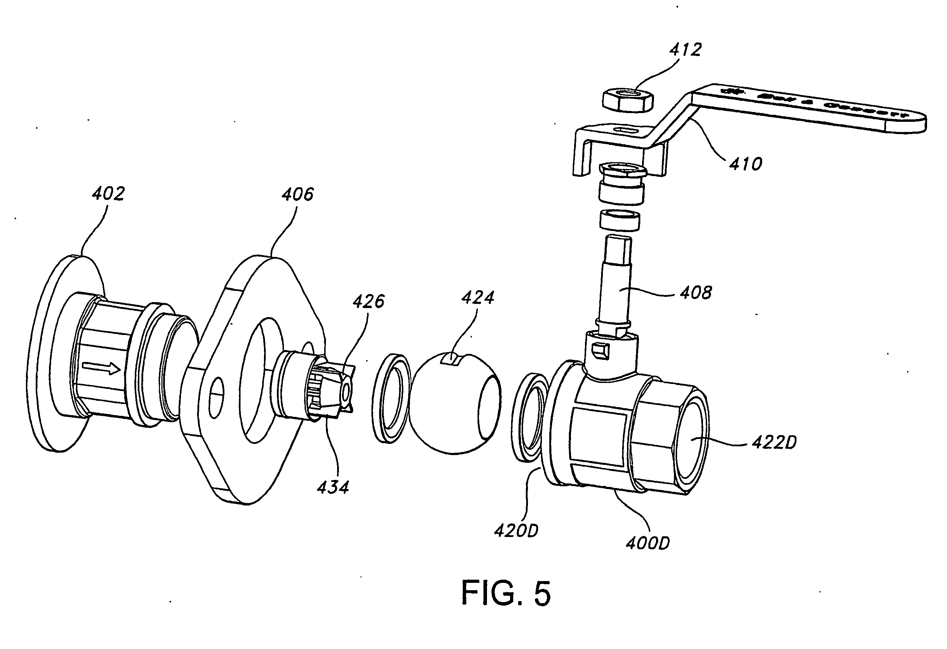

Unlike the embodiment described previously with reference to Figures 1A - 3, each valve assembly illustrated in Figures 4 - 6 includes a check valve 426 located between rotatable flange 406 and valve member 424 for preventing fluid flow from outlet port 422D, 422S to inlet port 420D, 420S, respectively, when an associated fluid system is unpressurized. Check valve 426 is located within insert 402. Insert 402 is similar to insert 102 disclosed in Figures 1A and 1B, except that insert 402 is elongated relative to insert 102 such that insert 402 can accommodate the check valve 426. Referring specifically to Figures 4 and 5 (and valve body 400D of Figure 6), check valve 426 is located adjacent inlet port 420D, i.e., adjacent the upstream portion of the system fluid flow path. In other words, the embodiment illustrated in Figures 4 and 5 (and valve body 400D of Figure 6) is a valve assembly configured to be installed on the discharge side of a system component (not shown) that requires removal.

Conversely, a valve assembly that is configured to be installed on the suction side of a system component that requires removal is oriented in the opposite direction from that shown in Figures 4 and 5 (and valve body 400D of Figure 6), with check valve 426 oriented in the same direction as that shown in Figures 4 and 5 (and valve body 400D of Figure 6), i.e., adjacent the upstream portion of the system fluid flow path. Such an embodiment is illustrated as valve body 400S in Figure 6. As shown in Figure 6, each valve assembly may be oriented along the system fluid flow path as necessary to simplify the coupling of each rotatable flange 406 to its mating flange on the system component to be isolated. However, check valve 426 is always located within insert 402 at the inlet port 420D, 420S of valve housing 400D, 400S, respectively, i.e., adjacent the upstream portion of the system fluid flow path. As illustrated in Figure 6, the inlet port 420S of the suction side valve assembly 400S is located adjacent the upstream portion of the system fluid flow path and, thus, the upstream side of a system component that requires removal. The inlet port 420D of the discharge side valve assembly 400D is also located adjacent the upstream portion of the system fluid flow path and, thus, the downstream side of a system component that requires removal.

Check valve 426 includes a seat 428, a plunger 430, a spring 432, and a plurality of guides 434 for guiding fluid flow through the fluid flow channel 409. Spring 432 has a relaxed position and a compressed position. Plunger 430 contacts seat 428 when spring 432 is in the relaxed position (as illustrated in Figure 4), thereby preventing fluid flow through the valve assembly from the outlet port 422D to the inlet port 420D. In other words, check valve 426 is normally closed via the force of spring 432. Plunger 430 is separated from seat 428 when spring 432 is in the compressed position, thereby permitting fluid flow through the valve assembly 400D from the inlet port 420D through the outlet port 422D. In other words, system pressure will overcome the force of spring 432, permitting fluid to flow in only one direction (upstream to downstream), while check valve 426 prevents fluid from flowing in the opposite direction (downstream to upstream), when the system is at rest.

This embodiment may combine the features of the rotatable flange 106, 406 and a quarter turn ball valve 98, 498 with a check valve 426. Such a combination within a valve assembly isolates equipment so that it can be conveniently removed without draining the system, and provides a positive check that prevents undesirable gravity flow.

While the invention has been described with respect to particular embodiments, those of ordinary skill in the art will appreciate variations in structure and substitutions of materials that are within the scope of the invention as defined by the appended claims.

## Claims

1. A valve assembly having
a quarter turn ball valve (98, 498) including a valve housing (100, 400) having an inlet and an outlet port (20, 22; 420, 422);
an insert (102) including a flow channel coupled to one of the ports in the housing and a lip (104) formed on its free end;
a flange (106, 406) that after assembly is rotatably carried on the insert, the flange having a circular hole (115), **characterized in that** the diameter of the circular hole (115) is greater than that of the insert body such that the flange snugly, but rotatably fits on the exterior of the insert (102) and said diameter is less than that of the valve housing, the axial thickness of the flange being less than the axial length of the space between the lip (104, 406) and the valve housing (100, 400), the lip (104) providing an abutment that serves to prevent the flange from being removed from the assembled valve assembly, the flange (106, 406) further having openings (116, 206) for receiving fasteners that secure the assembly in a fluid system.

2. The valve assembly of claim 1, wherein the quarter turn ball valve (98, 498) includes a valve stem coupled to a handle (110) and stop that limit the rotation of the valve stem.

3. The valve assembly of claim 2, wherein the stops include a skirt (111) formed on the handle and shoulders (113) formed on the valve housing that cooperate with the skirt to limit rotation of the valve stem.

4. The valve assembly of claim 1, wherein the insert is formed of brass.

5. The valve assembly of claim 1, wherein the flange (106, 406) is a stamped chrome plated steel flange.

6. The valve assembly of claim 1, further comprising a check valve (426) located in the insert between the flange and one of the ports for preventing fluid flow from the outlet port to the inlet port when an associated fluid system is unpressurized.

7. The valve assembly of claim 6 wherein the check valve (426) is located adjacent the inlet port (420).

8. The valve assembly of claim 6 wherein the check valve (426) comprises:
a seat (428); a plunger (430) cooperating with the seat to prevent or permit flow ; and a spring (432) having a relaxed position wherein the spring urges the plunger against the seat to prevent flow and a compressed position wherein the plunger is spaced from the seat and permits flow.

9. The valve assembly of claim 1, wherein the flange (106, 406) is a stamped zinc plated steel flange.

## Patentansprüche

1. Ventilanordnung, enthaltend
einen Vierteldrehungs-Kugelhahn (98, 498), der ein Ventilgehäuse (100, 400) mit einer Einlassöffnung und einer Auslassöffnung (20, 22; 420, 422) enthält;
einen Einsatz (102), der einen Durchflusskanal enthält, der mit einer der Öffnungen in dem Gehäuse verbunden ist, sowie eine an seinem freien Ende gebildete Lippe (104);
einen Flansch (106, 406), der nach dem Zusammenbau drehbar auf dem Einsatz gehalten ist, welcher Flansch ein kreisförmiges Loch (115) hat, **dadurch gekennzeichnet, dass** der Durchmesser des kreisförmigen Lochs (115) größer ist als derjenige des Einsatzkörpers, so dass der Flansch eng, aber drehbar auf der Außenseite des Einsatzes (102) sitzt und der Durchmesser kleiner ist als derjenige des Ventilgehäuses, wobei die axiale Dicke des Flansches geringer ist als die axiale Länge des Raumes zwischen der Lippe (104, 406) und dem Ventilgehäuse (100, 400), wobei die Lippe (104) ein Widerlager bereitstellt, welches dazu dient, zu verhindern, dass der Flansch aus der zusammengebauten Ventilanordnung entfernt wird, wobei der Flansch (104, 406) ferner Öffnungen (116, 206) zur Aufnahme von Befestigungsmitteln hat, welche die Anordnung in einem Fluidsystem befestigen.

2. Ventilanordnung nach Anspruch 1, bei welcher der Vierteldrehungs-Kugelhahn (98, 498) einen mit einem Handgriff (110) gekoppelten Ventilschaft und Anschläge einschließt, die die Drehung des Ventilschafts begrenzen.

3. Ventilanordnung nach Anspruch 2, bei welcher die Anschläge eine Schürze (111) umfassen, die an dem Handgriff gebildet ist, sowie Vorsprünge (113), die an dem Ventilgehäuse gebildet sind, welche mit der Schürze zur Begrenzung der Drehung des Ventilschaft zusammenwirken.

4. Ventilanordnung nach Anspruch 1, bei welcher der Einsatz aus Messing gebildet ist.

5. Ventilanordnung nach Anspruch 1, bei welcher der Flansch (106, 406) ein gestanzter verchromter Stahlflansch ist.

6. Ventilanordnung nach Anspruch 1, ferner enthaltend ein Rückschlagventil (426), welches in dem Einsatz zwischen dem Flansch und einer der Öffnungen angeordnet ist, um einen Fluidfluss von der Auslassöffnung zu der Einlassöffnung zu verhindern, wenn ein zugehöriges Fluidsystem nicht druckbeaufschlagt ist.

7. Ventilanordnung nach Anspruch 6, bei welcher das Rückschlagventil (426) der Einlassöffnung (420) benachbart angeordnet ist.

8. Ventilanordnung nach Anspruch 6, bei welcher das Rückschlagventil (446) enthält:
einen Sitz (428); einen Kolben (430), der mit dem Sitz zusammenwirkt, um den Durchfluss zu verhindern oder zuzulassen; und eine Feder (432), die eine entspannte Position einnimmt, in welcher die Feder den Kolben gegen den Sitz drückt, um den Durchfluss zu verhindern, und eine zusammengedrückte Position, in welcher der Kolben von dem Sitz beabstandet ist und den Durchfluss zulässt.

9. Ventilanordnung nach Anspruch 1, bei welcher der Flansch (106, 406) ein gestanzter verzinkter Stahlflansch ist.

## Revendications

1. Ensemble formant vanne, ayant
une vanne sphérique quart de tour (98, 498) incluant un boîtier de vanne (100, 400) ayant un orifice d'entrée et un orifice de sortie (20, 22 ; 420, 422) ;
un insert (102) incluant un canal d'écoulement couplé à l'un des orifices dans le boîtier et une lèvre (104) formée sur son extrémité libre ;
une bride (106, 406) qui, après assemblage, est portée en rotation sur l'insert, la bride ayant un trou circulaire (115),
**caractérisé en ce que** le diamètre du trou circulaire (115) est supérieur à celui du corps d'insert, de telle façon que la bride se loge de façon étroite mais avec possibilité de rotation sur l'extérieur de l'insert (102), et ledit diamètre est inférieur à celui du boîtier de vanne, l'épaisseur axiale de la bride étant inférieure à la longueur axiale de l'espace entre la lèvre (104, 406) et le boîtier de vanne (100, 400), la lèvre (104) constituant une butée qui sert à empêcher d'enlever la bride hors de l'ensemble formant valve assemblé, la bride (106, 406) ayant en outre des ouvertures (116, 206) pour recevoir des éléments de fixation qui attachent l'ensemble dans un système à fluide.

2. Ensemble formant vanne selon la revendication 1, dans lequel la vanne sphérique quart de tour (98, 498) inclut une tige de vanne couplée à une manette (110) et un arrêt qui limite la rotation de la tige de vanne.

3. Ensemble formant vanne selon la revendication 2, dans lequel l'arrêt inclut une jupe (111) formée sur la manette, et des épaulements (113) formés sur le boîtier de vanne, qui coopèrent avec la jupe pour limiter la rotation de la tige de vanne.

4. Ensemble formant vanne selon la revendication 1, dans lequel l'insert est formé en laiton.

5. Ensemble formant vanne selon la revendication 1, dans lequel la bride (106, 406) est une bride estampée en acier plaqué au chrome.

6. Ensemble formant vanne selon la revendication 1, comprenant en outre un clapet anti-retour (426) situé dans l'insert entre la bride et l'un des orifices pour empêcher un écoulement de fluide de l'orifice de sortie vers l'orifice d'entrée quand un système à fluide associé est sans pression.

7. Ensemble formant vanne selon la revendication 6, dans lequel le clapet anti-retour (426) est placé adjacent à l'orifice d'entrée (420).

8. Ensemble formant vanne selon la revendication 6, dans lequel le clapet anti-retour (426) comprend :
un siège (428) ; un plongeur (430) coopérant avec le siège pour empêcher ou permettre un écoulement ; et un ressort (432) ayant une position relâchée dans laquelle le ressort force le plongeur contre le siège pour empêcher l'écoulement et une position comprimée dans laquelle le plongeur est espacé du siège et permet un écoulement.

9. Ensemble formant vanne selon la revendication 1, dans lequel la bride (106, 406) est une bride estampée en acier plaqué au zinc.
